# EUROPEAN PATENT APPLICATION

(11) **EP 4 742 720 A1**
(43) Date of publication of application: **13.05.2026**
(21) Application number: 24853235.0
(22) Date of filing: 17.04.2024
(51) Int. Cl.: H04W 12/06, H04W 76/15

(54) **DATA TRANSMISSION METHODS, DEVICE, AND STORAGE MEDIUM**

(30) Priority: 11.08.2023 CN 202311021062
(71) Applicant: ZTE Corporation, Shenzhen, Guangdong 518057 (CN)
(72) Inventor: YUAN, Liquan, Shenzhen, Guangdong 518057 (CN)
(74) Representative: Aipex B.V.
(86) International application number: PCT/CN2024/088177
(87) International publication number: WO 2025/035819

(57) **Abstract**

Provided are data transmission methods, a device, and a storage medium. A data transmission method applied to a first network device includes: receiving a first authentication frame sent by a first multi-link device; and forwarding the first authentication frame to a second network device in response to the first authentication frame including an authentication identifier.

## Description

### TECHNICAL FIELD

The present application relates to the technical field of communications and, in particular, to data transmission methods, a device, and a storage medium.

### BACKGROUND

Under an ultra high reliability access point multi-link device (UHR AP MLD) architecture, a terminal that establishes a connection with a UHR AP MLD may be a non-AP MLD supporting a Wi-Fi 7 protocol or a non-AP MLD supporting a Wi-Fi 8 protocol. An authentication request frame transmitted using the Wi-Fi 7 protocol, along with another key-generation-related frame (for example, an Extensible Authentication Protocol over LAN (EAPOL) frame), needs to be processed at a high media access control (high MAC) layer in an extremely high throughput access point multi-link device (EHT AP MLD). A non-AP MLD that supports the Wi-Fi 8 protocol and requires a cross-EHT AP MLD multi-link connection needs to transmit these packets to high MAC of the UHR AP MLD for processing. In the related art, there is no signaling to indicate whether the non-AP MLD supports the cross-EHT AP MLD multi-link connection defined in Wi-Fi 8. Consequently, the EHT AP MLD cannot determine whether a received multi-link authentication request frame should be forwarded to the high MAC of the UHR AP MLD for processing or should be processed locally by the EHT AP MLD.

### SUMMARY

In view of this, embodiments of the present application provide data transmission methods, a device, and a storage medium, which solve the technical problem in the related art that whether a received first authentication frame should be forwarded to a second network device for processing or should be processed locally by a first network device cannot be determined.

An embodiment of the present application provides a data transmission method applied to a first network device. The data transmission method includes the steps below.

A first authentication frame sent by a first multi-link device is received.

The first authentication frame is forwarded to a second network device in response to the first authentication frame including an authentication identifier.

An embodiment of the present application provides a data transmission method applied to a first multi-link device. The data transmission method includes the steps below.

A first authentication frame is sent to a first network device to enable, in response to the first authentication frame including an authentication identifier, the first authentication frame to be forwarded to a second network device through the first network device.

An embodiment of the present application provides a data transmission method applied to a second network device. The data transmission method includes the steps below.

A first authentication frame forwarded by a first network device is received, where the first authentication frame includes an authentication identifier.

An embodiment of the present application provides a communication device. The communication device includes a memory and at least one processor.

The memory is configured to store at least one program. When executed by the at least one processor, the at least one program causes the at least one processor to perform the method according to any one of the preceding embodiments.

An embodiment of the present application provides a storage medium storing a computer program which, when executed by a processor, causes the processor to perform the method according to any one of the preceding embodiments.

### BRIEF DESCRIPTION OF DRAWINGS

FIG. 1 is a diagram illustrating implementation of a multi-link connection establishment process according to the related art.
FIG. 2 is a diagram illustrating implementation of an interaction process of Simultaneous Authentication of Equals (SAE) multi-link authentication according to the related art.
FIG. 3 is a diagram illustrating interaction implementation of a four-way handshake according to the related art.
FIG. 4 is a diagram illustrating the format configuration of a multi-link operation (MLO) Link K Desktop Environment (KDE) according to the related art.
FIG. 5 is a diagram illustrating the format configuration of an MLO group temporal key (GTK) KDE according to the related art.
FIG. 6 is a diagram illustrating the format configuration of an integrity group temporal key (IGTK) KDE according to the related art.
FIG. 7 is a diagram illustrating the format configuration of an MLO beacon integrity group temporal key (BIGTK) according to the related art.
FIG. 8 is a configuration diagram of a UHR AP MLD architecture with centralized ultra high reliability upper media access control (UHR upper MAC) according to the related art.
FIG. 9 is a configuration diagram of a connection model before roaming according to the related art.
FIG. 10 is a configuration diagram of a connection model during roaming according to the related art.
FIG. 11 is a configuration diagram of a connection model after roaming according to the related art.
FIG. 12 is a network architecture diagram of a UHR AP MLD according to the related art.
FIG. 13 is a flowchart of a data transmission method according to an embodiment of the present application.
FIG. 14 is a flowchart of another data transmission method according to an embodiment of the present application.
FIG. 15 is a flowchart of another data transmission method according to an embodiment of the present application.
FIG. 16 is an interaction diagram of multi-link authentication for multiple EHT AP MLDs according to an embodiment of the present application.
FIG. 17 is a flowchart illustrating the processing of a received first authentication frame by an EHT AP MLD according to an embodiment of the present application.
FIG. 18 is an interaction diagram of a multi-link four-way handshake for multiple EHT AP MLDs according to an embodiment of the present application.
FIG. 19 is a diagram illustrating the format configuration of an MLO Link KDE according to an embodiment of the present application.
FIG. 20 is a diagram illustrating the format configuration of an MLO GTK KDE according to an embodiment of the present application.
FIG. 21 is a diagram illustrating the format configuration of an MLO IGTK KDE according to an embodiment of the present application.
FIG. 22 is a diagram illustrating the format configuration of an MLO BIGTK KDE according to an embodiment of the present application.
FIG. 23 is a block diagram of a data transmission apparatus according to an embodiment of the present application.
FIG. 24 is a block diagram of another data transmission apparatus according to an embodiment of the present application.
FIG. 25 is a block diagram of another data transmission apparatus according to an embodiment of the present application.
FIG. 26 is a diagram illustrating the structure of a communication device according to an embodiment of the present application.

### DETAILED DESCRIPTION

Embodiments of the present application are described hereinafter in conjunction with the drawings. The present application is described hereinafter in conjunction with embodiments and the drawings. The examples described hereinafter are intended to explain the present application and not to limit the scope of the present application.

In the Wi-Fi 7 protocol, a multi-link operation (MLO) technology is introduced. Multi-link devices (MLDs) include network devices (AP MLDs) and terminal devices (non-AP MLDs). A multi-link device may transmit data on multiple links simultaneously, thereby improving the data transmission throughput and reducing the data transmission delay.

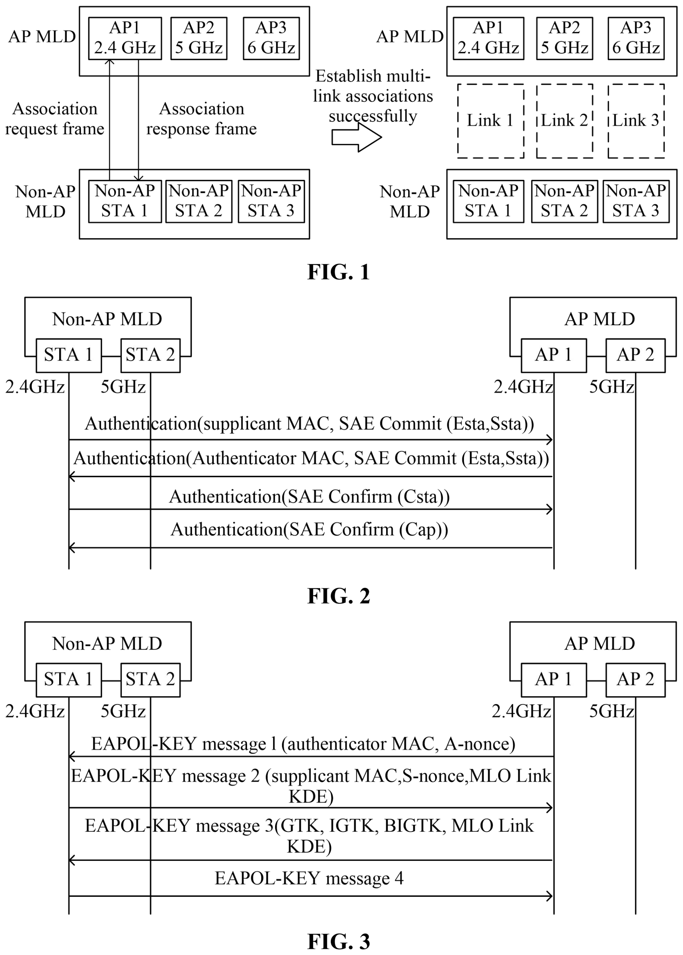

After an AP MLD and a non-AP MLD complete a four-way handshake on a link, an MLO-level pairwise transient key (PTK) and a link-level group temporal key (GTK) are generated. The PTK and the GTK are used to encrypt transmitted unicast data frames and broadcast data frames and decrypt transmitted unicast data frames and broadcast data frames, respectively, thereby ensuring the security of data transmission. Exemplarily, FIG. 1 is a diagram illustrating implementation of a multi-link connection establishment process according to the related art. As shown in FIG. 1, the AP MLD and the non-AP MLD each include three links operating in the 2.4 GHz, 5 GHz, and 6 GHz bands. The AP MLD and the non-AP MLD complete authentication, connection, and the 4-way handshake on the 2.4 GHz link. After a multi-link connection is established, data transmission may be performed on the three links (link1, link2, and link3).

During a multi-link authentication process, an SAE protocol may be used to exchange relevant information. Messages of the SAE protocol include commit messages and confirm messages. FIG. 2 is a diagram illustrating implementation of an interaction process of SAE multi-link authentication according to the related art. As shown in FIG. 2, the implementation process is described below.

In step 1, the non-AP MLD sends an authentication frame to the AP MLD. The authentication frame includes a supplicant MAC address and an SAE commit message (hereinafter referred to as a commit message).

The commit message includes a scalar S(Ssta) and an element E(Esta) that are generated by the non-AP MLD.

In step 2, the AP MLD sends an authentication frame to the non-AP MLD. The authentication frame includes an authenticator MAC address and an SAE commit message.

The commit message includes a scalar S(Sap) and an element E(Eap) that are generated by the AP MLD.

In step 3, on the non-AP MLD and the AP MLD, a key element P is generated according to a predefined algorithm using locally stored shared key information, the supplicant MAC address, and the authenticator MAC address.

In step 4, at the non-AP MLD end, K1 is generated according to a predefined key algorithm using the key element P, S(ap), E(ap), and a local random number r(sta).

In step 5, at the AP MLD end, K2 is generated according to a predefined key algorithm using the key element P, S(sta), E(sta), and a local random number r(ap).

In step 6, at the non-AP MLD end, K3 is generated using K1, a confirm message (Csta) is generated according to a predefined key algorithm using K3, S(ap), E(ap), S(sta), and E(sta), and the confirm message is sent to the AP MLD using the authentication frame.

In step 7, at the AP MLD end, K4 is generated using K2, and a confirm message (Cap) is generated according to a predefined key algorithm using K4, S(ap), E(ap), S(sta), and E(sta). (Cap) is compared with (Csta), and if (Cap) matches (Csta), Cap is sent to the non-AP MLD using the authentication frame.

In step 8, at the non-AP MLD end, Csta is compared with the received Cap. If Csta matches Cap, this confirms that locally generated keys satisfy that K1 = K2, and K1/K2 is used as the Pairwise Master Key (PMK).

FIG. 3 is a diagram illustrating interaction implementation of a four-way handshake according to the related art. After the interaction of an association request frame and a response frame is completed, the AP MLD sends, on an associated link, a data frame containing an Extensible Authentication Protocol over LAN (EAPOL)-Key message to the non-AP MLD, thereby initiating the four-way handshake. As shown in FIG. 3, the implementation process of the four-way handshake is as follows.

In step 1, the AP MLD sends a first EAPOL-Key frame (hereinafter referred to as EAPOL-1) to the non-AP MLD. The first EAPOL-Key frame includes an authenticator MAC address and a random number (A-nonce) generated by the authenticator end.

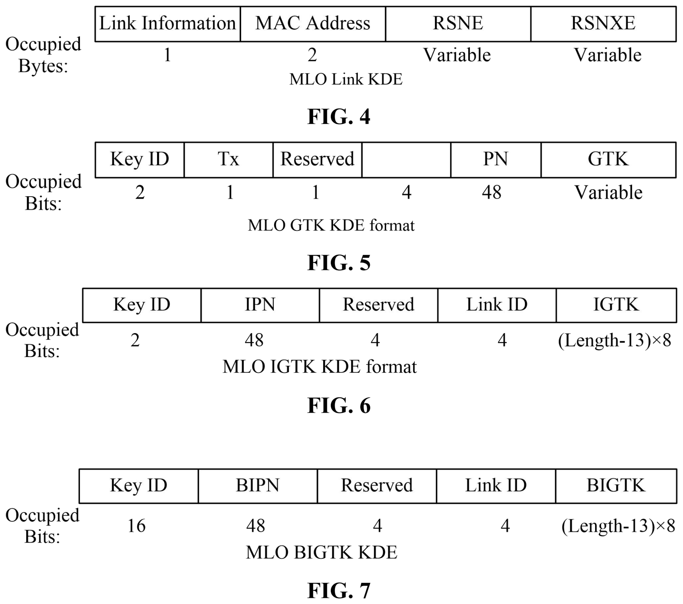

In step 2, the non-AP MLD sends a second EAPOL-Key frame (hereinafter referred to as EAPOL-2) to the AP MLD. The second EAPOL-Key frame includes a supplicant MAC address, a random number (S-nonce) generated by the supplicant end, and Robust Security Network Element (RSNE) and Robust Security Network extension element (RSNXE) information that is requested by the non-AP MLD for each link. FIG. 4 is a diagram illustrating the format configuration of an MLO Link KDE according to the related art. As shown in FIG. 4, an MLO Link KDE field at least includes a Robust Security Network Element (RSNE) and a Robust Security Network extension element (RSNXE).

In step 3, the AP MLD sends a third EAPOL-Key frame (hereinafter referred to as EAPOL-3) to the non-AP MLD. The third EAPOL-Key frame includes GTK information, IGTK information, BIGTK information, RSN information and RSNXE information of a requested link at the AP MLD end, and integrity check information. FIG. 5 is a diagram illustrating the format configuration of an MLO GTK KDE according to the related art. As shown in FIG. 5, a GTK KDE field at least includes a Link ID field. FIG. 6 is a diagram illustrating the format configuration of an IGTK KDE according to the related art. As shown in FIG. 6, an IGTK KDE field at least includes a Link ID field and an IGTK field. FIG. 7 is a diagram illustrating the format configuration of an MLO BIGTK according to the related art. As shown in FIG. 7, a BIGTK KDE field at least includes a Link ID field and a BIGTK field.

In step 4, the non-AP MLD sends a fourth EAPOL-Key frame (hereinafter referred to as EAPOL-4) to the AP MLD. The fourth EAPOL-Key frame includes integrity check information.

In the Wi-Fi 8 protocol, it is proposed that affiliated APs of the same UHR AP MLD may be deployed at different locations, thereby addressing roaming latency at the device end. In addition, through cooperation between multiple affiliated APs within the same UHR AP MLD, channel utilization can be addressed.

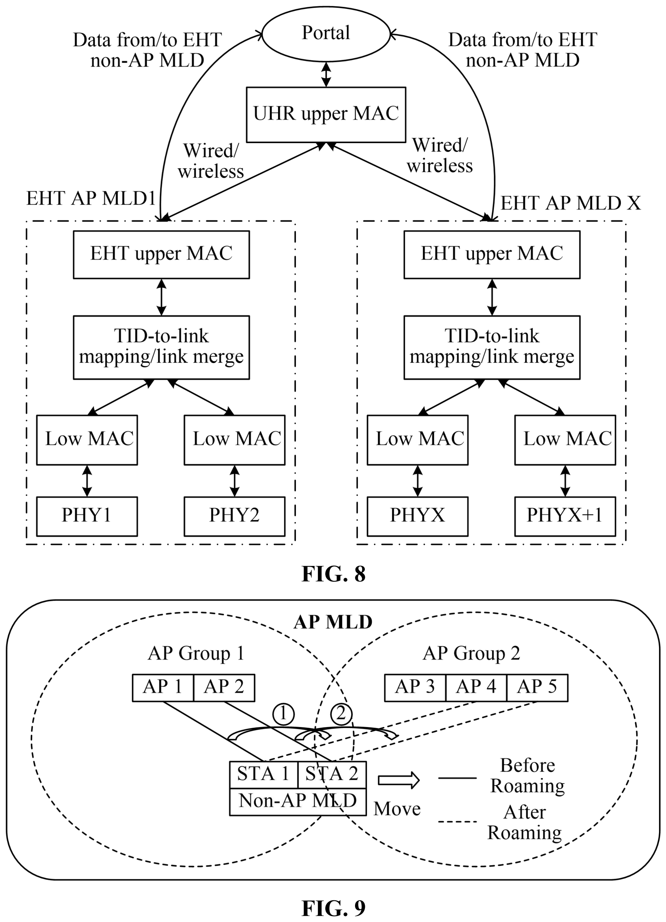

A centralized UHR AP MLD architecture is provided in a seamless roaming solution under a non-peer AP MLD architecture. FIG. 8 is a configuration diagram of a UHR AP MLD architecture with centralized UHR upper MAC according to the related art. As shown in FIG. 8, one UHR AP MLD includes multiple EHT AP MLDs (for example, EHT AP MLD 1, EHT AP MLD 2, ..., EHT AP MLD X) deployed on different physical device nodes and one UHR upper MAC. A UHR non-AP MLD may establish a link connection with low MAC of any node without switching the connected network, thereby solving data transmission latency caused by network switching.

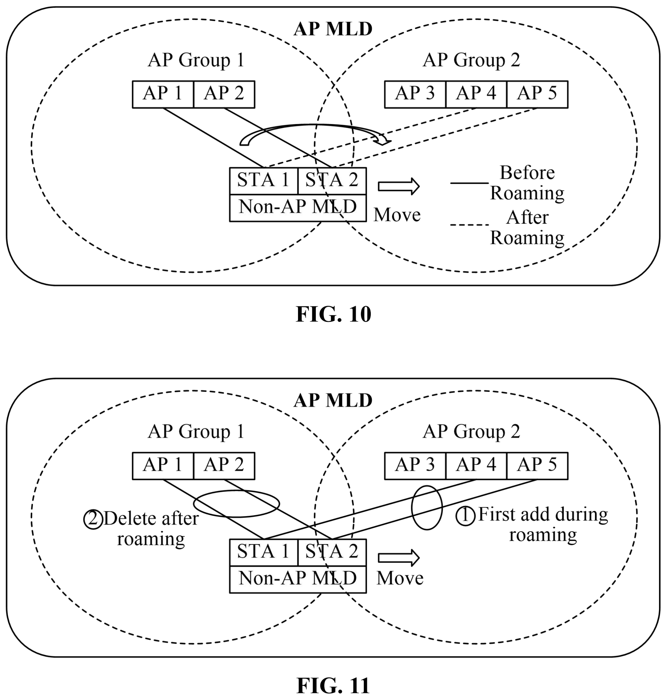

Based on the framework shown in FIG. 8, an overall roaming model is provided, including three stages: pre-roaming, roaming, and post-roaming. FIG. 9 is a configuration diagram of a connection model before roaming according to the related art. FIG. 10 is a configuration diagram of a connection model during roaming according to the related art. FIG. 11 is a configuration diagram of a connection model after roaming according to the related art. As shown in FIG. 9, before roaming, a non-AP MLD selects a target AP Group and target links (link4 and link5). As shown in FIG. 10, during the roaming process, the non-AP MLD is disconnected from a link (AP1) of AP Group 1 and connected to AP Group 2 (AP4) and then repeats the process by disconnecting from a link (AP2) of AP Group 1 and connected to AP Group 2 (AP5), thereby completing the roaming process, as shown in FIG. 11.

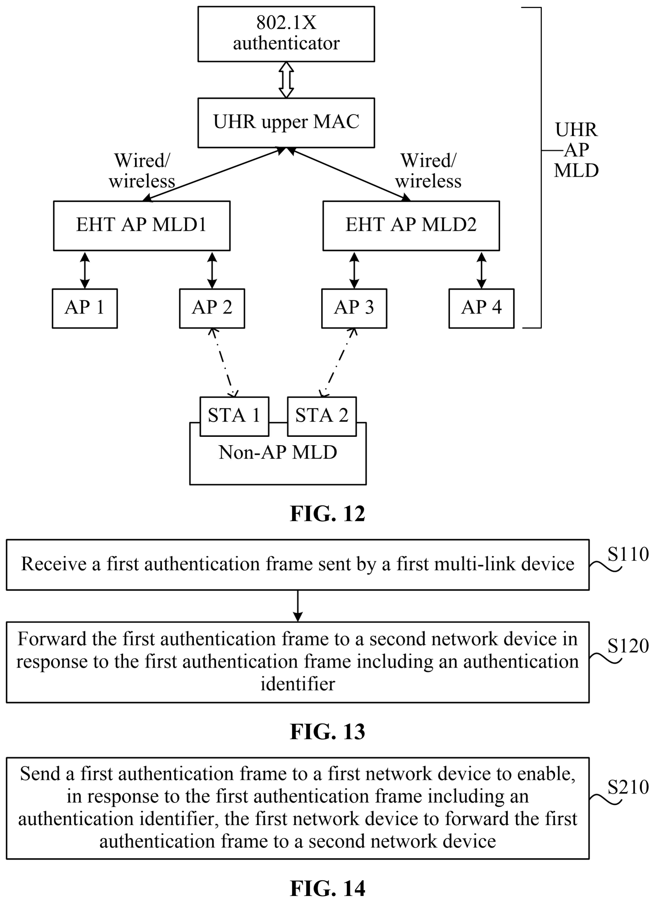

FIG. 12 is a network architecture diagram of a UHR AP MLD according to the related art. As shown in FIG. 12, under a UHR AP MLD architecture, multi-link authentication and key generation process across EHT AP MLDs has the problems below.

First, a terminal connected to the UHR AP MLD may be a non-AP MLD that supports either the Wi-Fi 7 protocol or the Wi-Fi 8 protocol. The authentication request frame sent by Wi-Fi 7, along with another key-generation-related frame (such as the EAPOL frame), needs to be processed at the high MAC of the EHT AP MLD. The non-AP MLD that supports Wi-Fi 8 and requires the cross-EHT AP MLD multi-link connection needs to transmit these packets to the high MAC of the UHR AP MLD for processing. At present, there is no signaling to indicate whether the non-AP MLD supports the cross-EHT AP MLD multi-link connection defined in Wi-Fi 8. Consequently, the EHT AP MLD cannot determine whether the received multi-link authentication request frame should be forwarded to the high MAC of the UHR AP MLD for processing or should be processed locally by the EHT AP MLD.

Second, EHT AP MLD 1 and EHT AP MLD 2 each have their own distinct MLD MAC addresses; however, these two MLD MAC addresses cannot uniquely identify a UHR AP MLD. Therefore, these two MLD MAC addresses cannot be used as authentication addresses in an authentication response frame and cannot be sent to the non-AP MLD.

Third, during the four-way handshake of the initial connection, the UHR AP MLD needs to send GTK, IGTK, and BIGTK of each link that establishes a multi-link connection to the non-AP MLD. However, since each EHT AP MLD independently assigns a Link ID to its affiliated link, in scenarios involving multi-link connections with multiple EHT AP MLDs, the same Link IDs may be duplicated across different links. The non-AP MLD cannot distinguish key information of different links using the existing Link IDs, and therefore cannot perform decryption and integrity check on multicast packets transmitted on corresponding links.

Fourth, during the roaming process, the UHR AP MLD needs to send GTK, IGTK, and BIGTK of each link that newly establishes a multi-link connection, to the non-AP MLD, and to promptly release a resource corresponding to a removed link. However, since each EHT AP MLD independently assigns a Link ID to its affiliated link, and the numbering range of each link is 0 to 14 or 0 to 15, a scenario may arise in which two EHT AP MLDs contain links with the same Link ID. The UHR AP MLD cannot determine, based on the Link ID defined in the 802.11be protocol, which EHT AP MLD the multicast-related key of a link belongs to.

For ease of understanding, in embodiments of the present application, a first network device may be an EHT AP MLD, a second network device may be a UHR AP MLD, and a first multi-link device may be a non-AP MLD (for example, a UHR non-AP MLD or an EHT non-AP MLD).

In an embodiment, FIG. 13 is a flowchart of a data transmission method according to an embodiment of the present application. This embodiment is applied to the case where whether a first authentication frame needs to be processed by the first network device is automatically determined. This embodiment may be executed by a first network device. As shown in FIG. 13, this embodiment includes S110 and S120.

In S110, a first authentication frame sent by a first multi-link device is received.

In S120, the first authentication frame is forwarded to a second network device in response to the first authentication frame including an authentication identifier.

In the embodiment, the authentication identifier is used to represent whether the first authentication frame is forwarded to the second network device, and may also be used to represent whether the first authentication frame is processed by the first network device or by the second network device. After the first multi-link device sends the first authentication frame including the authentication identifier to the first network device, the first network device directly forwards the first authentication frame to the second network device to enable the second network device to parse and process the first authentication frame. In an embodiment, the first authentication frame is processed directly in response to the first authentication frame not including the authentication identifier. The first network device directly parses and processes the first authentication frame in response to the first authentication frame sent by the first multi-link device not including the authentication identifier.

In an embodiment, the data transmission method applied to the first network device further includes: receiving, from the second network device, a second authentication frame including the authentication identifier; and forwarding the second authentication frame to the first multi-link device. After the first multi-link device sends the first authentication frame including the authentication identifier to the first network device, the first network device directly forwards the first authentication frame including the authentication identifier to the second network device. The second network device parses and processes the first authentication frame to generate the second authentication frame including the authentication identifier, and the second authentication frame including the authentication identifier is sent to the first network device through a backhaul link. The first network device then directly forwards the second authentication frame including the authentication identifier to the first multi-link device.

In an embodiment, the data transmission method applied to the first network device further includes: parsing the first authentication frame to obtain a first authentication commit message or a first authentication confirm message that corresponds to the first authentication frame; and forwarding the first authentication commit message or the first authentication confirm message to the second network device in response to the first authentication frame including the authentication identifier. After the first multi-link device sends the first authentication frame to the first network device, the first network device may parse the first authentication frame including the authentication identifier to obtain the first authentication commit message or the first authentication confirm message that corresponds to the first authentication frame, and the first authentication commit message or the first authentication confirm message is forwarded to the second network device in response to the first authentication frame including the authentication identifier.

In an embodiment, the data transmission method applied to the first network device further includes: receiving a second authentication commit message or a second authentication confirm message that is sent by the second network device; combining the received authentication identifier, or an authentication identifier generated by the first network device with the second authentication commit message or the second authentication confirm message to form a corresponding second authentication frame; and forwarding the second authentication frame to the first multi-link device. After the first multi-link device sends the first authentication frame to the first network device, the first network device may parse the first authentication frame including the authentication identifier to obtain the first authentication commit message or the first authentication confirm message that corresponds to the first authentication frame; in response to the first authentication frame including the authentication identifier, the first network device forwards the first authentication commit message or the first authentication confirm message to the second network device, and the second network device processes the first authentication commit message or the first authentication confirm message to obtain the second authentication commit message or the second authentication confirm message. The second network device then sends the second authentication commit message or the second authentication confirm message to the first network device so that the first network device combines the authentication identifier sent by the second network device with the second authentication commit or the second authentication confirm message to generate the corresponding second authentication frame including the authentication identifier, or so that the first network device combines the authentication identifier generated by the first network device with the second authentication commit message or the second authentication confirm message to generate the corresponding second authentication frame including the authentication identifier. The first network device then directly forwards the second authentication frame including the authentication identifier to the first multi-link device.

In an example, in the case where the first authentication commit message is parsed from the first authentication frame, the second network device generates the corresponding second authentication commit message according to the first authentication commit message; and in the case where the first authentication confirm message is parsed from the first authentication frame, the second network device generates the corresponding second authentication confirm message according to the first authentication confirm message.

In an embodiment, the authentication identifier includes one of the following: a media access control (MAC) address of the first network device, a MAC address of the second network device, or roaming capability indication information. The roaming capability indication information is used to indicate whether a UHR roaming capability is available. In an example, in the case where the roaming capability indication information is 1, the first network device directly forwards the first authentication frame to the second network device, and the second network device processes the first authentication frame; in the case where the roaming capability indication information is 0, the first network device may process the first authentication frame.

In an embodiment, the data transmission method applied to the first network device further includes: receiving a first Extensible Authentication Protocol over LAN frame sent by the second network device, where the first Extensible Authentication Protocol over LAN frame at least carries the MAC address of the second network device; and forwarding the first Extensible Authentication Protocol over LAN frame to the first multi-link device. Each second network device is configured with a uniquely identified MAC address. In the first Extensible Authentication Protocol over LAN frame, the MAC address of the second network device may be used to populate an authentication address field of the first Extensible Authentication Protocol over LAN frame. The second network device generates the first Extensible Authentication Protocol over LAN frame and sends the first Extensible Authentication Protocol over LAN frame to the first network device through the backhaul link, and the first network device may send the first Extensible Authentication Protocol over LAN frame to the first multi-link device through a 2.4 GHz or 5 GHz association link.

In an embodiment, the data transmission method applied to the first network device further includes: receiving a second Extensible Authentication Protocol over LAN frame sent by the first multi-link device, where the second Extensible Authentication Protocol over LAN frame at least carries link identifier information including a first network device identifier and an identifier of a link; and forwarding the second Extensible Authentication Protocol over LAN frame to the second network device. After receiving the first Extensible Authentication Protocol over LAN frame sent by the first network device, the first multi-link device sends the second Extensible Authentication Protocol over LAN frame to the first network device through the 2.4 GHz or 5 GHz association link so that the first network device forwards the second Extensible Authentication Protocol over LAN frame to the second network device through the backhaul link. In an example, the second Extensible Authentication Protocol over LAN frame at least includes the link identifier information including the first network device identifier and the identifier of the link, so as to accurately distinguish information transmitted on different links on different first network devices.

In an embodiment, the first network device identifier includes at least one of the following: a MAC address of the first network device or a first network device index. The first network device identifier is used to uniquely represent an identifier of each first network device. In an example, the first network device identifier may be the MAC address of the first network device, or may be a device index of the first network device.

**In** an embodiment, the data transmission method applied to the first network device further includes: receiving a third Extensible Authentication Protocol over LAN frame sent by the second network device, where the third Extensible Authentication Protocol over LAN frame at least includes the first network device identifier, the identifier of the link, and a group temporal key (GTK) on the link; and forwarding the third Extensible Authentication Protocol over LAN frame to the first multi-link device. The second network device generates the third Extensible Authentication Protocol over LAN frame and sends the third Extensible Authentication Protocol over LAN frame to the first network device through the backhaul link, and the third Extensible Authentication Protocol over LAN frame at least includes the first network device identifier, the identifier of the link, and the group temporal key on the link so that the second network device can accurately determine, based on the identifier of the link, on which first network device a key of the link is checked.

In an embodiment, the third Extensible Authentication Protocol over LAN frame further includes a GTK field, and the frame structure of the GTK field at least includes a first device identifier field, where the first device identifier field is configured to indicate the first network device identifier corresponding to the third Extensible Authentication Protocol over LAN frame. During the four-way handshake of the initial connection, the second network device may send the third Extensible Authentication Protocol over LAN frame that at least carries the first device identifier to the first network device, and the first network device forwards the third Extensible Authentication Protocol over LAN frame that at least carries the first device identifier to the first multi-link device. In this manner, the first multi-link device can distinguish authentication information on different links through the first device identifier, thereby performing decryption and integrity check on packets transmitted on corresponding links.

In an embodiment, the third Extensible Authentication Protocol over LAN frame further includes an integrity group temporal key (IGTK) information field, a beacon integrity group temporal key (BIGTK) information field, an RSNE information field, and an RSNXE information field.

A frame structure of the IGTK information field, a frame structure of the BIGTK information field, a frame structure of the RSNE information field, and a frame structure of the RSNXE information field each at least includes a first device identifier field. The first device identifier field is configured to indicate the first network device identifier corresponding to the third Extensible Authentication Protocol over LAN frame. During the four-way handshake of the initial connection, the second network device may send GTK, IGTK, and BIGTK of each link that establishes a multi-link connection, as well as the third Extensible Authentication Protocol over LAN frame of the first device identifier to the first network device, and the first network device forwards the third Extensible Authentication Protocol over LAN frame that at least carries the first device identifier to the first multi-link device. In this manner, the first multi-link device can distinguish the authentication information on the different links through the first device identifier, thereby performing the decryption and integrity check on the packets transmitted on the corresponding links.

In an embodiment, FIG. 14 is a flowchart of another data transmission method according to an embodiment of the present application. This embodiment may be executed by a first multi-link device. As shown in FIG. 14, this embodiment includes S210.

In S210, a first authentication frame is sent to a first network device to enable, in response to the first authentication frame including an authentication identifier, the first network device to forward the first authentication frame to a second network device.

In an embodiment, the authentication identifier includes one of the following: a MAC address of the first network device, a MAC address of the second network device, or roaming capability indication information.

In an embodiment, the data transmission method applied to the first multi-link device further includes receiving a first Extensible Authentication Protocol over LAN frame forwarded by the first network device, where the first Extensible Authentication Protocol over LAN frame at least carries the MAC address of the second network device.

In an embodiment, the data transmission method applied to the first multi-link device further includes sending a second Extensible Authentication Protocol over LAN frame to the first network device, where the second Extensible Authentication Protocol over LAN frame at least carries link identifier information including a first network device identifier and an identifier of a link.

In an embodiment, the data transmission method applied to the first multi-link device further includes receiving a third Extensible Authentication Protocol over LAN frame forwarded by the first network device, where the third Extensible Authentication Protocol over LAN frame at least includes the first network device identifier, the identifier of the link, and a group temporal key on the link.

In an embodiment, the first network device identifier includes at least one of the following: the MAC address of the first network device or a first network device index.

In an embodiment, the third Extensible Authentication Protocol over LAN frame further includes a GTK field, and the frame structure of the GTK field at least includes a first device identifier field. The first device identifier field is configured to indicate the first network device identifier corresponding to the third Extensible Authentication Protocol over LAN frame.

In an embodiment, the third Extensible Authentication Protocol over LAN frame further includes an IGTK information field, a BIGTK information field, an RSNE information field, and an RSNXE information field.

A frame structure of the IGTK information field, a frame structure of the BIGTK information field, a frame structure of the RSNE information field, and a frame structure of the RSNXE information field each at least includes the first device identifier field. The first device identifier field is configured to indicate the first network device identifier corresponding to the third Extensible Authentication Protocol over LAN frame.

In an embodiment, in response to an operation other than the four-way handshake, the data transmission method applied to the first multi-link device further includes receiving first key information on a new link that is sent by the second network device, where the first key information at least includes the link identifier information. The first key information refers to GTK information, IGTK information, and BIGTK information. In the case where roaming occurs on the first multi-link device, for example, a link is dynamically added, or a link is switched, the second network device sends the first key information on the new link to the first multi-link device, and the first key information at least includes the link identifier information and the first key information on the link. The link identifier information may be an identifier of a link across a multi-link device.

It is to be noted that explanations of parameters, such as the first authentication frame, the authentication identifier, the first Extensible Authentication Protocol over LAN frame, the second Extensible Authentication Protocol over LAN frame, and the third Extensible Authentication Protocol over LAN frame, which are involved in the first multi-link device are the same as those described in the preceding for the corresponding parameters applied to the first network device, and are not repeated herein.

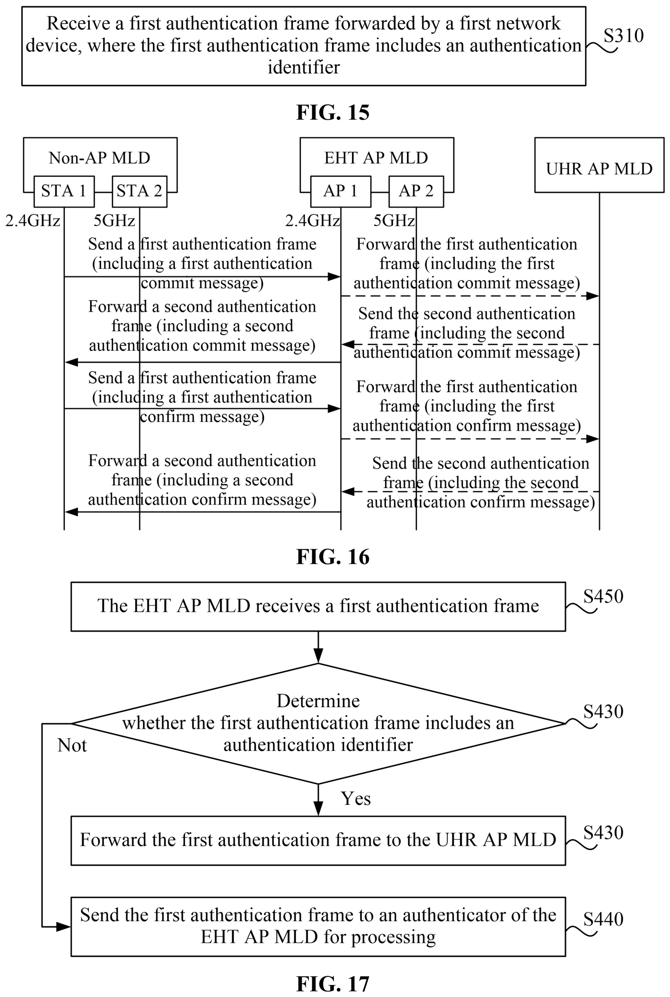

In an embodiment, FIG. 15 is a flowchart of another data transmission method according to an embodiment of the present application. This embodiment may be executed by a second network device. As shown in FIG. 15, this embodiment includes S310.

In S310, a first authentication frame forwarded by a first network device is received, where the first authentication frame includes an authentication identifier.

In an embodiment, the authentication identifier includes one of the following: a MAC address of the first network device, a MAC address of the second network device, or roaming capability indication information.

In an embodiment, the data transmission method applied to the second network device further includes sending a first Extensible Authentication Protocol over LAN frame to the first network device, where the first Extensible Authentication Protocol over LAN frame at least carries the MAC address of the second network device.

In an embodiment, the data transmission method applied to the second network device further includes receiving a second Extensible Authentication Protocol over LAN frame forwarded by the first network device, where the second Extensible Authentication Protocol over LAN frame at least carries link identifier information including a first network device identifier and an identifier of a link.

In an embodiment, the data transmission method applied to the second network device further includes sending a third Extensible Authentication Protocol over LAN frame to the first network device, where the third Extensible Authentication Protocol over LAN frame at least includes the first network device identifier, the identifier of the link, and a group temporal key on the link.

In an embodiment, the first network device identifier includes at least one of the following: the MAC address of the first network device or a first network device index.

In an embodiment, the third Extensible Authentication Protocol over LAN frame further includes a GTK field, and the frame structure of the GTK field at least includes a first device identifier field. The first device identifier field is configured to indicate the first network device identifier corresponding to the third Extensible Authentication Protocol over LAN frame.

In an embodiment, the third Extensible Authentication Protocol over LAN frame further includes an IGTK information field, a BIGTK information field, an RSNE information field, and an RSNXE information field.

A frame structure of the IGTK information field, a frame structure of the BIGTK information field, a frame structure of the RSNE information field, and a frame structure of the RSNXE information field each at least includes a first device identifier field. The first device identifier field is configured to indicate the first network device identifier corresponding to the third Extensible Authentication Protocol over LAN frame.

In an embodiment, in response to an operation other than the four-way handshake, the data transmission method applied to the second network device further includes sending first key information on a new link to a first multi-link device, where the first key information at least includes the link identifier information.

It is to be noted that explanations of parameters, such as the first authentication frame, the authentication identifier, the first Extensible Authentication Protocol over LAN frame, the second Extensible Authentication Protocol over LAN frame, and the third Extensible Authentication Protocol over LAN frame, which are involved in the second network device are the same as those described in the preceding for the corresponding parameters applied to the first network device or the first multi-link device, and are not repeated herein.

In the following embodiments, the authentication process and the four-way handshake are described by using an example in which the first network device is the EHT AP MLD, the second network device is the UHR AP MLD, and the first multi-link device is the non-AP MLD.

Each UHR AP MLD is composed of a UHR upper MAC (which includes an authenticator running on it) and multiple EHT AP MLDs at different physical locations. Each EHT AP MLD establishes a backhaul link with the UHR upper MAC in a wired or wireless manner.

Based on this, an embodiment of the present application provides, under the UHR AP MLD architecture, an authentication and four-way handshake solution for multi-link connections with multiple EHT AP MLDs. This solution can not only enable the non-AP MLD to establish multi-link connections with a single EHT AP MLD under the UHR AP MLD, but also enable the non-AP MLD to establish multiple-link connections with multiple EHT AP MLDs under the UHR AP MLD.

In an embodiment, FIG. 16 is an interaction diagram of multi-link authentication for multiple EHT AP MLDs according to an embodiment of the present application. In this embodiment, the multi-link authentication for the multiple EHT AP MLDs is described using an example in which the first multi-link device is the non-AP MLD, the first network device is EHT AP MLD 1, the second network device is the UHR AP MLD, EHT AP MLD 1 includes two APs (AP1 and AP2, respectively), and the non-AP MLD includes two STAs (STA1 and STA2, respectively). As shown in FIG. 16, the multi-link connection authentication for the multiple EHT AP MLDs is as follows.

In step 1, the non-AP MLD sends a first authentication frame (referred to as authentication) including an authentication identifier and a first authentication commit message to EHT AP MLD 1 through a first link (link 1).

In step 2, after receiving the first authentication frame through link 1 and parsing the authentication identifier, EHT AP MLD 1 sends the first authentication frame to the UHR AP MLD through a backhaul link.

In step 3, the UHR AP MLD parses and processes authentication 1 to generate a second authentication frame (referred to as authentication) including a second authentication commit message and sends the second authentication frame to EHT AP MLD 1 through the backhaul link.

In step 4, EHT AP MLD 1 forwards the second authentication frame to the non-AP MLD.

In step 5, the preceding steps are repeated to complete the interaction between the first authentication frame that is generated by the non-AP MLD end and includes the first authentication confirm message, and the second authentication frame that is generated by the UHR AP MLD end and includes the second authentication confirm message.

The preceding steps shown in FIG. 16 are further explained as follows.

In some application examples, the authentication identifier is a MAC address of the UHR AP MLD or a MAC address of the UHR non-AP MLD; in some other application examples, the authentication identifier is UHR seamless roaming capability indication information.

In some application examples, EHT AP MLD 1 receives the authentication frame including the authentication identifier on the first link, parses the authentication frame, and forwards information (for example, commit information or confirm information) carried in the authentication frame to the UHR AP MLD. Similarly, EHT AP MLD 1 receives authentication information (for example, commit information or confirm information) from the UHR AP MLD on the backhaul link, combines a corresponding authentication frame, and sends the authentication frame to the non-AP MLD through the first link.

In some application examples, EHT AP MLD 1 receives the authentication frame including the authentication identifier on the first link and, without parsing the authentication frame, forwards the entire authentication frame to the UHR AP MLD. Similarly, EHT AP MLD 1 receives the authentication frame from the UHR AP MLD on the backhaul link and, without parsing, sends the authentication frame to the non-AP MLD through the first link. This process may involve modifications to protocol frame headers.

In some application examples, when the EHT AP MLD receives an authentication frame including no authentication identifier on the first link, the authentication frame is processed at the authentication of the EHT AP MLD and is not forwarded to the UHR AP MLD.

In an example, FIG. 17 is a flowchart illustrating the processing of a received first authentication frame by an EHT AP MLD according to an embodiment of the present application. As shown in FIG. 17, the processing of the received first authentication frame by the EHT AP MLD is S410 to S440 below.

In S410, the EHT AP MLD receives a first authentication frame.

In S420, whether the first authentication frame includes an authentication identifier is determined. If yes, S430 is executed; if not, S440 is executed.

In S430, the first authentication frame is forwarded to the UHR AP MLD.

In S440, the first authentication frame is sent to an authenticator of the EHT AP MLD for processing.

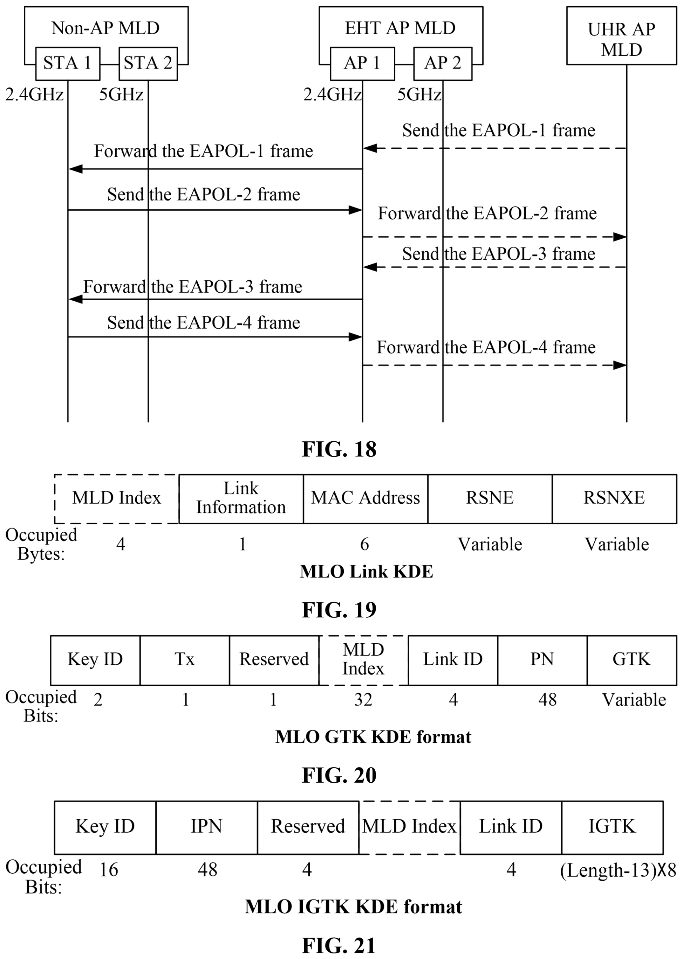

In an example, FIG. 18 is an interaction diagram of a multi-link four-way handshake for multiple EHT AP MLDs according to an embodiment of the present application. In an embodiment, the interaction of the multi-link four-way handshake for the multiple EHT AP MLDs is described using an example in which communication is performed on a 2.4 GHz link, the first Extensible Authentication Protocol over LAN frame is a EAPOL-1 frame, the second Extensible Authentication Protocol over LAN is a EAPOL-2 frame, the third Extensible Authentication Protocol over LAN is a EAPOL-3 frame, and the fourth Extensible Authentication Protocol over LAN is a EAPOL-4 frame. As shown in FIG. 18, the multi-link four-way handshake for the multiple EHT AP MLDs is implemented as follows.

In step 1, the first network device (the UHR AP MLD) generates the EAPOL-1 frame and sends the EAPOL-1 frame to the second network device (the EHT AP MLD 1) through the backhaul link. The EAPOL-1 frame at least includes authenticator MAC and A-nonce.

In step 2, the EHT AP MLD 1 sends the EAPOL-1 frame to the first multi-link device (the non-AP MLD) through the 2.4 GHz association link.

In step 3, after receiving the EAPOL-1 frame, the non-AP MLD sends the EAPOL-2 frame to EHT AP MLD 1 through the 2.4 GHz link.

The EAPOL-2 frame at least includes a supplicant MAC address, S-nonce, the unique identifier information of a requested link, and the corresponding RSNE and RSNXE of the link at the non-AP MLD end.

In step 4, the EHT AP MLD 1 sends the EAPOL-2 frame to the UHR AP MLD through the backhaul link.

In step 5, the UHR AP MLD generates the EAPOL-3 frame and sends the EAPOL-3 frame to EHT AP MLD 1 through the backhaul link. The EAPOL-3 frame at least includes identifiers of multiple connected links and GTK information of the identifiers of the multiple connected links, as well as RSNE and RSNXE information and message integrity check (MIC) information for a link at the corresponding UHR AP MLD end.

In step 6, the EHT AP MLD 1 may transmit the EAPOL-3 frame to the non-AP MLD through the 2.4 GHz association link.

In step 7, the non-AP MLD may transmit the EAPOL-4 frame to EHT AP MLD 1 through the 2.4 GHz association link, and the EAPOL-4 frame at least includes MIC information.

In step 8, the EHT AP MLD 1 sends the EAPOL-4 frame to the UHR AP MLD through the backhaul link.

The preceding steps shown in FIG. 18 are further explained as follows.

In some application examples, the UHR AP MLD is configured with a uniquely identified MAC address, and in the EAPOL-1 frame, the MAC address of the UHR AP MLD is used to populate an authenticator address field.

In some application examples, the link identifier information is identified using an EHT AP MLD identifier (that is, the first network device identifier in the preceding embodiments) and a Link ID (that is, the identifier of the link in the preceding embodiments). The EHT AP MLD identifier may be a MAC address of the EHT AP MLD or an EHT AP MLD index (hereinafter referred to as an MLD index).

In some application examples, the EAPOL-2 frame includes the RSNE and RSNXE information. FIG. 19 is a diagram illustrating the format configuration of an MLO Link KDE according to an embodiment of the present application. As shown in FIG. 19, the MLO Link KDE at least includes the first network device identifier (that is, the MLD index).

In some application examples, the format of the GTK information in the EAPOL-3 frame is shown in FIG. 20, and the formats of the RSNE information and RSNXE information are shown in FIG. 19. FIG. 20 is a diagram illustrating the format configuration of an MLO GTK KDE according to an embodiment of the present application. As shown in FIG. 20, the MLO GTK KDE at least includes the first network device identifier (that is, the MLD index).

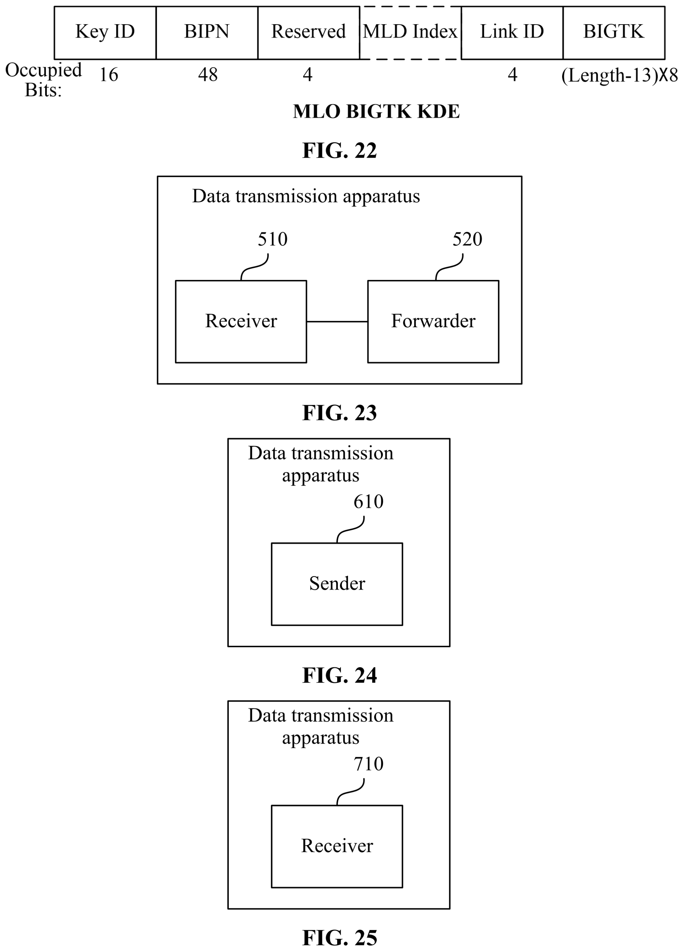

In some application examples, the EAPOL-3 frame may further include IGTK information and BIGTK information, whose formats are shown in FIG. 21 and FIG. 22, respectively. FIG. 21 is a diagram illustrating the format configuration of an MLO IGTK KDE according to an embodiment of the present application. As shown in FIG. 21, the MLO IGTK KDE at least includes the first network device identifier (that is, the MLD index). FIG. 22 is a diagram illustrating the format configuration of an MLO BIGTK KDE according to an embodiment of the present application. As shown in FIG. 22, the MLO BIGTK KDE at least includes the first network device identifier (that is, the MLD index).

In some application examples, in a roaming scenario, such as dynamically adding a link or switching a link, in the case where the UHR AP MLD transmits GTK, IGTK, and BIGTK information of a new link to the non-AP MLD, a cross-MLD link identifier and the GTK, IGTK, and BIGTK information that correspond to the link are included.

In an embodiment, FIG. 23 is a block diagram of a data transmission apparatus according to an embodiment of the present application. This embodiment is applied to a first network device. As shown in FIG. 23, the data transmission apparatus in this embodiment includes a receiver 510 and a forwarder 520.

The receiver 510 is configured to receive a first authentication frame sent by a first multi-link device.

The forwarder 520 is configured to forward the first authentication frame to a second network device in response to the first authentication frame including an authentication identifier.

In an embodiment, the first authentication frame is processed directly in response to the first authentication frame not including the authentication identifier.

In an embodiment, the data transmission apparatus applied to the first network device further includes the receiver 510 and the forwarder 520.

The receiver 510 is further configured to receive, from the second network device, a second authentication frame including an authentication identifier.

The forwarder 520 is further configured to forward the second authentication frame to the first multi-link device.

In an embodiment, the data transmission apparatus applied to the first network device further includes a parsing module and the forwarder 520.

The parsing module is configured to parse the first authentication frame to obtain a first authentication commit message or a first authentication confirm message that corresponds to the first authentication frame.

The forwarder 520 is further configured to forward the first authentication commit message or the first authentication confirm message to the second network device in response to the first authentication frame including the authentication identifier.

In an embodiment, the data transmission apparatus applied to the first network device further includes the receiver 510, a combination module, and the forwarder 520.

The receiver 510 is further configured to receive a second authentication commit message or a second authentication confirm message that is sent by the second network device.

The combination module is configured to combine the received authentication identifier, or an authentication identifier generated by the first network device with the second authentication commit message or the second authentication confirm message to form a corresponding second authentication frame.

The forwarder 520 is further configured to forward the second authentication frame to the first multi-link device.

In an embodiment, the authentication identifier includes one of the following: a media access control (MAC) address of the first network device, a MAC address of the second network device, or roaming capability indication information.

In an embodiment, the data transmission apparatus applied to the first network device further includes the receiver 510 and the forwarder 520.

The receiver 510 is further configured to receive a first Extensible Authentication Protocol over LAN frame sent by the second network device, where the first Extensible Authentication Protocol over LAN frame at least carries a MAC address of the second network device.

The forwarder 520 is further configured to forward the first Extensible Authentication Protocol over LAN frame to the first multi-link device.

In an embodiment, the data transmission apparatus applied to the first network device further includes the receiver 510 and the forwarder 520.

The receiver 510 is further configured to receive a second Extensible Authentication Protocol over LAN frame sent by the first multi-link device, where the second Extensible Authentication Protocol over LAN frame at least carries link identifier information including a first network device identifier and an identifier of a link.

The forwarder 520 is further configured to forward the second Extensible Authentication Protocol over LAN frame to the second network device.

In an embodiment, the first network device identifier includes at least one of the following: a MAC address of the first network device or a first network device index.

In an embodiment, the data transmission apparatus applied to the first network device further includes the receiver 510 and the forwarder 520.

The receiver 510 is further configured to receive a third Extensible Authentication Protocol over LAN frame sent by the second network device, where the third Extensible Authentication Protocol over LAN frame at least includes the first network device identifier, the identifier of the link, and a group temporal key on the link.

The forwarder 520 is further configured to forward the third Extensible Authentication Protocol over LAN frame to the first multi-link device.

In an embodiment, the frame structure of the group temporal key at least includes a first device identifier field, where the first device identifier field is configured to indicate the first network device identifier corresponding to the third Extensible Authentication Protocol over LAN frame.

In an embodiment, the third Extensible Authentication Protocol over LAN frame further includes an integrity group temporal key (IGTK) information field, a beacon integrity group temporal key (BIGTK) information field, a Robust Security Network Element (RSNE) information field, and a Robust Security Network extension element (RSNXE) information field.

A frame structure of the IGTK information field, a frame structure of the BIGTK information field, a frame structure of the RSNE information field, and a frame structure of the RSNXE information field each at least includes the first device identifier field, where the first device identifier field is configured to indicate the first network device identifier corresponding to the third Extensible Authentication Protocol over LAN frame.

The data transmission apparatus provided in this embodiment is configured to perform the data transmission method applied to the first network device in the embodiment shown in FIG. 13 and has implementation principles and technical effects similar to those of the data transmission method applied to the first network device, where the details are not repeated herein.

**In** an embodiment, FIG. 24 is a block diagram of another data transmission apparatus according to an embodiment of the present application. This embodiment is applied to a first multi-link device. As shown in FIG. 24, the data transmission apparatus in this embodiment includes a sender 610.

The sender 610 is configured to send a first authentication frame to a first network device to enable, in response to the first authentication frame including an authentication identifier, the first network device to forward the first authentication frame to a second network device.

**In** an embodiment, the authentication identifier includes one of the following: a MAC address of the first network device, a MAC address of the second network device, or roaming capability indication information.

**In** an embodiment, the data transmission apparatus applied to the first multi-link device further includes a receiver.

The receiver is configured to receive a first Extensible Authentication Protocol over LAN frame forwarded by the first network device, where the first Extensible Authentication Protocol over LAN frame at least carries the MAC address of the second network device.

**In** an embodiment, the data transmission apparatus applied to the first multi-link device further includes the sender 610.

The sender 610 is further configured to send a second Extensible Authentication Protocol over LAN frame to the first network device, where the second Extensible Authentication Protocol over LAN frame at least carries link identifier information including a first network device identifier and an identifier of a link.

**In** an embodiment, the data transmission apparatus applied to the first multi-link device further includes the receiver.

The receiver is further configured to receive a third Extensible Authentication Protocol over LAN frame forwarded by the first network device, where the third Extensible Authentication Protocol over LAN frame at least includes the first network device identifier, the identifier of the link, and a group temporal key on the link.

**In** an embodiment, the first network device identifier includes at least one of the following: a MAC address of the first network device or a first network device index.

**In** an embodiment, the third Extensible Authentication Protocol over LAN frame further includes a GTK field, and the frame structure of the GTK field at least includes a first device identifier field, where the first device identifier field is configured to indicate the first network device identifier corresponding to the third Extensible Authentication Protocol over LAN frame.

**In** an embodiment, the third Extensible Authentication Protocol over LAN frame further includes an IGTK information field, a BIGTK information field, an RSNE information field, and an RSNXE information field.

A frame structure of the IGTK information field, a frame structure of the BIGTK information field, a frame structure of the RSNE information field, and a frame structure of the RSNXE information field each at least includes a first device identifier field, where the first device identifier field is configured to indicate the first network device identifier corresponding to the third Extensible Authentication Protocol over LAN frame.

**In** an embodiment, in response to an operation other than the four-way handshake, the data transmission apparatus applied to the first multi-link device further includes the receiver.

The receiver is further configured to receive first key information on a new link that is sent by the second network device, where the first key information at least includes link identifier information.

The data transmission apparatus provided in this embodiment is configured to perform the data transmission method applied to the first multi-link device in the embodiment shown in FIG. 14 and has implementation principles and technical effects similar to those of the data transmission method applied to the first multi-link device, where the details are not repeated herein.

In an embodiment, FIG. 25 is a block diagram of another data transmission apparatus according to an embodiment of the present application. This embodiment is applied to a second network device. As shown in FIG. 25, the data transmission apparatus in this embodiment includes a receiver 710.

The receiver 710 is configured to receive a first authentication frame forwarded by a first network device, where the first authentication frame includes an authentication identifier.

In an embodiment, the authentication identifier includes one of the following: a MAC address of the first network device, a MAC address of the second network device, or roaming capability indication information.

In an embodiment, the data transmission apparatus applied to the second network device further includes a sender.

The sender is configured to send a first Extensible Authentication Protocol over LAN frame to the first network device, where the first Extensible Authentication Protocol over LAN frame at least carries the MAC address of the second network device.

In an embodiment, the data transmission apparatus applied to the second network device further includes the receiver 710.

The receiver 710 is further configured to receive a second Extensible Authentication Protocol over LAN frame forwarded by the first network device, where the second Extensible Authentication Protocol over LAN frame at least carries link identifier information including a first network device identifier and an identifier of a link.

**In** an embodiment, the data transmission apparatus applied to the second network device further includes the sender.

The sender is further configured to send a third Extensible Authentication Protocol over LAN frame to the first network device, where the third Extensible Authentication Protocol over LAN frame at least includes the first network device identifier, the identifier of the link, and a group temporal key on the link.

**In** an embodiment, the first network device identifier includes at least one of the following: a MAC address of the first network device or a first network device index.

**In** an embodiment, the third Extensible Authentication Protocol over LAN frame further includes a GTK field, and the frame structure of the GTK field at least includes a first device identifier field, where the first device identifier field is configured to indicate the first network device identifier corresponding to the third Extensible Authentication Protocol over LAN frame.

**In** an embodiment, the third Extensible Authentication Protocol over LAN frame further includes an IGTK information field, a BIGTK information field, an RSNE information field, and an RSNXE information field.

A frame structure of the IGTK information field, a frame structure of the BIGTK information field, a frame structure of the RSNE information field, and a frame structure of the RSNXE information field each at least includes the first device identifier field, where the first device identifier field is configured to indicate the first network device identifier corresponding to the third Extensible Authentication Protocol over LAN frame.

**In** an embodiment, in response to an operation other than the four-way handshake, the data transmission apparatus applied to the second network device further includes the sender.

The sender is further configured to send first key information on a new link to a first multi-link device, where the first key information at least includes link identifier information.

The data transmission apparatus provided in this embodiment is configured to perform the data transmission method applied to the second network device in the embodiment shown in FIG. 15 and has implementation principles and technical effects similar to those of the data transmission method applied to the second network device, where the details are not repeated herein.

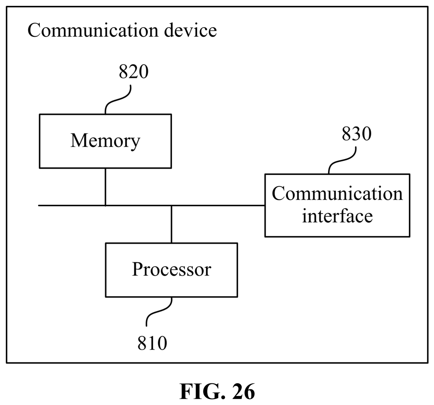

In an embodiment, FIG. 26 is a diagram illustrating the structure of a communication device according to an embodiment of the present application. As shown in FIG. 26, the device provided in the present application includes a processor 810, a memory 820, and a communication interface 830. One or more processors 810 may be provided in the device. FIG. 26 shows one processor 810 as an example. One or more memories 820 may be provided in the device. FIG. 26 shows one memory 820 as an example. The processor 810, the memory 820, and the communication interface 830 in the device may be connected via a bus or in other manners. The connection via a bus is shown as an example in FIG. 26. In this embodiment, the device may be a resource management component.

As a computer-readable storage medium, the memory 820 may be configured to store software programs, computer-executable programs, and modules, such as program instructions/modules corresponding to the device of any embodiment of the present application (for example, the receiver 510 and the forwarder 520 in the data transmission apparatus applied to the first network device). The memory 820 may include a program storage region and a data storage region. The program storage region may store an operating system and an application program required by at least one function. The data storage region may store data created according to the use of the device. In addition, the memory 820 may include a high-speed random-access memory and may also include a nonvolatile memory such as at least one disk memory, a flash memory, or another nonvolatile solid-state memory. In some examples, the memory 820 may be remote from the processor 810 and connectable to the device via a network. Examples of the network include, but are not limited to, the Internet, an intranet, a local area network, a mobile communication network, and a combination thereof. The communication interface 830 is used for communication interactions among multiple communication devices.

**In** the case where the communication device is the first network device, the device may be configured to perform the data transmission method applied to the first network device according to any preceding embodiment and has corresponding functions and effects.

**In** the case where the communication device is the first multi-link device, the device may be configured to perform the data transmission method applied to the first multi-link device according to any preceding embodiment and has corresponding functions and effects.

**In** the case where the communication device is the second network device, the device may be configured to perform the data transmission method applied to the second network device according to any preceding embodiment and has corresponding functions and effects.

An embodiment of the present application further provides a storage medium including computer-executable instructions which, when executed by a computer processor, are configured to perform the data transmission method applied to the first network device. The method includes: receiving a first authentication frame sent by a first multi-link device; and forwarding the first authentication frame to a second network device in response to the first authentication frame including an authentication identifier.

An embodiment of the present application further provides a storage medium including computer-executable instructions which, when executed by a computer processor, are configured to perform the data transmission method applied to the first multi-link device. The method includes: sending a first authentication frame to a first network device to enable, in response to the first authentication frame including an authentication identifier, the first network device to forward the first authentication frame to a second network device.

An embodiment of the present application further provides a storage medium including computer-executable instructions which, when executed by a computer processor, are configured to perform the data transmission method applied to the second network device. The method includes: receiving a first authentication frame forwarded by a first network device, where the first authentication frame includes an authentication identifier.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The preceding describes preferred embodiments of the present application that are not intended to limit the present application. For those skilled in the art, the present application may have various modifications and variations. Any modifications, equivalent substitutions, and improvements that are made within the spirit and principle of the present application should fall within the scope of the present application.

## Claims

1. A data transmission method, applied to a first network device and comprising:
receiving a first authentication frame sent by a first multi-link device; and
forwarding the first authentication frame to a second network device in response to the first authentication frame comprising an authentication identifier.

2. The method according to claim 1, wherein the first authentication frame is processed directly in response to the first authentication frame not comprising the authentication identifier.

3. The method according to claim 1, further comprising:
receiving, from the second network device, a second authentication frame comprising the authentication identifier; and
forwarding the second authentication frame to the first multi-link device.

4. The method according to claim 1, further comprising:
parsing the first authentication frame to obtain a first authentication commit message or a first authentication confirm message that corresponds to the first authentication frame; and
forwarding the first authentication commit message or the first authentication confirm message to the second network device in response to the first authentication frame comprising the authentication identifier.

5. The method according to claim 4, further comprising:
receiving a second authentication commit message or a second authentication confirm message that is sent by the second network device;
combining the received authentication identifier, or an authentication identifier generated by the first network device with the second authentication commit message or the second authentication confirm message to form a corresponding second authentication frame; and
forwarding the second authentication frame to the first multi-link device.

6. The method according to any one of claims 1 to 5, wherein the authentication identifier comprises one of the following: a media access control, MAC, address of the first network device, a MAC address of the second network device, or roaming capability indication information.

7. The method according to claim 1, further comprising:
receiving a first Extensible Authentication Protocol over local area network, LAN, frame sent by the second network device, wherein the first Extensible Authentication Protocol over LAN frame at least carries a MAC address of the second network device; and
forwarding the first Extensible Authentication Protocol over LAN frame to the first multi-link device.

8. The method according to claim 7, further comprising:
receiving a second Extensible Authentication Protocol over LAN frame sent by the first multi-link device, wherein the second Extensible Authentication Protocol over LAN frame at least carries link identifier information comprising a first network device identifier and an identifier of a link; and
forwarding the second Extensible Authentication Protocol over LAN frame to the second network device.

9. The method according to claim 8, wherein the first network device identifier comprises at least one of the following: a MAC address of the first network device or a first network device index.

10. The method according to claim 8, further comprising:
receiving a third Extensible Authentication Protocol over LAN frame sent by the second network device, wherein the third Extensible Authentication Protocol over LAN frame at least comprises the first network device identifier, the identifier of the link, and a group temporal key, GTK, on the link; and
forwarding the third Extensible Authentication Protocol over LAN frame to the first multi-link device.

11. The method according to claim 10, wherein the third Extensible Authentication Protocol over LAN frame further comprises a GTK field, and a frame structure of the GTK field at least comprises a first device identifier field, wherein the first device identifier field is configured to indicate the first network device identifier corresponding to the third Extensible Authentication Protocol over LAN frame.

12. The method according to claim 10, wherein the third Extensible Authentication Protocol over LAN frame further comprises an integrity group temporal key, IGTK, information field, a beacon integrity group temporal key, BIGTK, information field, a robust security network element, RSNE, information field, and a robust security network extension element, RSNXE, information field;
wherein a frame structure of the IGTK information field, a frame structure of the BIGTK information field, a frame structure of the RSNE information field, and a frame structure of the RSNXE information field each at least comprises the first device identifier field, wherein the first device identifier field is configured to indicate the first network device identifier corresponding to the third Extensible Authentication Protocol over LAN frame.

13. A data transmission method, applied to a first multi-link device and comprising:
sending a first authentication frame to a first network device to enable, in response to the first authentication frame comprising an authentication identifier, the first network device to forward the first authentication frame to a second network device.

14. The method according to claim 13, further comprising:
receiving a first Extensible Authentication Protocol over LAN frame forwarded by the first network device, wherein the first Extensible Authentication Protocol over LAN frame at least carries a media access control, MAC, address of the second network device.

15. The method according to claim 14, further comprising:
sending a second Extensible Authentication Protocol over LAN frame to the first network device, wherein the second Extensible Authentication Protocol over LAN frame at least carries link identifier information comprising a first network device identifier and an identifier of a link.

16. The method according to claim 15, further comprising:
receiving a third Extensible Authentication Protocol over LAN frame forwarded by the first network device, wherein the third Extensible Authentication Protocol over LAN frame at least comprises the first network device identifier, the identifier of the link, and a group temporal key on the link.

17. The method according to claim 13, in response to an operation other than a four-way handshake, further comprising:
receiving first key information on a new link that is sent by the second network device, wherein the first key information at least comprises link identifier information.

18. A data transmission method, applied to a second network device and comprising:
receiving a first authentication frame forwarded by a first network device, wherein the first authentication frame comprises an authentication identifier.

19. The method according to claim 18, further comprising:
sending a first Extensible Authentication Protocol over local area network, LAN, frame to the first network device, wherein the first Extensible Authentication Protocol over LAN frame at least carries a media access control, MAC, address of the second network device.

20. The method according to claim 19, further comprising:
receiving a second Extensible Authentication Protocol over LAN frame forwarded by the first network device, wherein the second Extensible Authentication Protocol over LAN frame at least carries link identifier information comprising a first network device identifier and an identifier of a link.

21. The method according to claim 20, further comprising:
sending a third Extensible Authentication Protocol over LAN frame to the first network device, wherein the third Extensible Authentication Protocol over LAN frame at least comprises the first network device identifier, the identifier of the link, and a group temporal key, GTK, on the link.

22. The method according to claim 18, in response to an operation other than a four-way handshake, further comprising:
sending first key information on a new link to a first multi-link device, wherein the first key information at least comprises link identifier information.

23. A communication device, comprising a memory and at least one processor;
wherein the memory is configured to store at least one program; and when executed by the at least one processor, the at least one program causes the at least one processor to perform the method of any one of claims 1 to 12, the method of any one of claims 13 to 17, or the method of any one of claims 18 to 22.

24. A storage medium storing a computer program which, when executed by a processor, causes the processor to perform the method of any one of claims 1 to 12, the method of any one of claims 13 to 17, or the method of any one of claims 18 to 22.
